# EUROPÄISCHE PATENTANMELDUNG

(11) **EP 1 132 878 A2**
(43) Veröffentlichungstag der Anmeldung: **12.09.2001**
(21) Anmeldenummer: 00121589.6
(22) Anmeldetag: 02.10.2000
(51) Int. Cl.: G07F 19/00, G07F 7/08, H04L 29/06

(54) **Verfahren zur Zahlungsabwicklung in zumindest teilweise öffentlich zugänglichen, elektronischen Netzen**

(30) Priorität: 03.03.2000 DE 10012012
(71) Anmelder: Heinicke, Dietrich, 10178 Berlin (DE); Hicke, Christian, 14513 Teltow (DE); Lottmann, Burkhard, 10585 Berlin (DE); Richter, Gerd, 10409 Berlin (DE); Erdmann, Henk, 14974 Ludwigsfelde (DE)
(72) Erfinder: Heinicke, Dietrich, 10178 Berlin (DE); Hicke, Christian, 14513 Teltow (DE); Lottmann, Burkhard, 10585 Berlin (DE); Richter, Gerd, 10409 Berlin (DE); Erdmann, Henk, 14974 Ludwigsfelde (DE)
(74) Vertreter: Schüll, Gottfried Dipl.-Phys.

(57) **Zusammenfassung**

Die Erfindung betrifft ein Verfahren zur Zahlungsabwicklung in zumindest teilweise öffentlich zugänglichen, elektronischen Netzen, bei welchem einem Kreditor von einem Debitor über eine elektronische Nachricht ein Auftrag über die Lieferung eines Wirtschaftsgutes erteilt wird, dem Debitor vom Kreditor über eine elektronische Nachricht zumindest eine identifizierbare Auftragsbestätigung und die Höhe der Zahlung übermittelt werden, einer Bank des Debitors vom Debitor über eine signierte elektronische Nachricht zumindest die Zahlungsabsicht des Debitors, die Höhe der Zahlung, die Identifikation der Auftragsbestätigung und die Identität des Kreditors übermittelt werden, dem Kreditor von der Bank des Debitors über eine signierte elektronische Nachricht zumindest das Vorhandensein der Bonität des Debitors und die Identifikation des Auftrags übermittelt werden, der Bank des Debitors vom Kreditor und/oder dem Debitor über eine signierte elektronische Nachricht zumindest eine Bestätigung der Lieferung des Wirtschaftsgutes und die Identifikation des Auftrages übermittelt werden, dem Kreditor von der Bank des Debitors eine Zahlung angewiesen wird. Erfindungsgemäß wird also ein Verfahren zur Zahlungsabwicklung zur Verfügung gestellt, welches preiswert, mit hoher Geschwindigkeit und einfach zu bedienen sowie bei gleichzeitiger Erfüllung höchster Sicherheitsanforderungen arbeitet.

## Beschreibung

Die Erfindung betrifft ein Verfahren zur Zahlungsabwicklung in zumindest teilweise öffentlich zugänglichen, elektronischen Netzen sowie ein EDV-System und ein Computerprogramm zur Zahlungsabwicklung in zumindest teilweise öffentlich zugänglichen, elektronischen Netzen.

In den letzten Jahren hat sich aufgrund der starken Zunahme von über öffentlich zugängliche, elektronische Netze abgeschlossene Vertragsbeziehungen ein starkes Bedürfnis zur Abwicklung der mit diesen Vertragsbeziehungen verknüpften Zahlungen, ebenfalls über die öffentlich zugänglichen, elektronischen Netze entwickelt. Die weitaus größte Bedeutung bei den öffentlich zugänglichen, elektronischen Netzen kommt hierbei dem Internet zu.

Die Problematik bei der Abwicklung von Zahlungen über öffentlich zugängliche, elektronische Netze, beispielsweise dem Internet, liegt im einfachen Abhören, Verändern und Imitieren der über diese Netze versandten elektronischen Nachrichten. Um die Zahlungsabwicklung über zumindest teilweise öffentlich zugängliche, elektronische Netze sicher und zuverlässig zu gewährleisten, müssen bei einem Verfahren zur Zahlungsabwicklung in diesen Netzen die Vertraulichkeit - kein Dritter soll beispielsweise Kreditkarten- oder PIN-Nummern ausspähen können -, die Integrität - eine Veränderung der Daten auf dem Weg vom Absender zum Empfänger darf nicht möglich sein - und die Authentizität - durch gegenseitige Authentisierung stellen beide Partner sicher, daß sie diejenigen sind, für die sie sich ausgeben - hergestellt werden. Ganz wesentliche Merkmale von über öffentlich zugängliche, elektronische Netze abgewickelte Zahlungen sind die Verbindlichkeit - d.h. die Zahlungsabsicht darf nicht abstreitbar sein - die Rechtswirksamkeit und die Anonymität der Zahlungen.

Weitere praktische Kriterien, die ein Verfahren zur Zahlungsabwicklung in zumindest teilweise öffentlich zugänglichen, elektronischen Netzen gewährleisten muß, sind eine hohe Geschwindigkeit der Zahlungsabwicklung und die leichte Bedienbarkeit eines Verfahrens zur Zahlungsabwicklung.

Zur weiteren Erläuterung der bekannten Verfahren zur Zahlungsabwicklung in öffentlich zugänglichen, elektronischen Netzen soll zunächst der Unterschied zwischen symmetrischen und asymmetrischen Verfahren zur Verschlüsselung der über elektronische Netze versendeten Nachrichten erläutert werden. Bei symmetrischen Verfahren zur Verschlüsselung wird derselbe Schlüssel für die Ver- und Entschlüsselung der Nachricht verwendet. Aus diesem Grund ist das Sicherheitsrisiko bei der Verwendung von symmetrischen Verschlüsselungsverfahren relativ hoch, da die Nachricht von jedem entschlüsselt werden kann, dem der Schlüssel bekannt ist. Gleichzeitig muß dieser Schlüssel jedoch den Empfängern zur Verfügung gestellt werden, um eine Entschlüsselung zu gewährleisten, wodurch eine unkontrollierte Verbreitung des Schlüssels in der Regel nicht ausgeschlossen werden kann. Bei asymmetrischen Verfahren zur Verschlüsselung von Informationen existiert ein öffentlicher und ein privater Schlüssel. Die Nachricht wird bei asymmetrischen Verfahren zur Verschlüsselung vom Absender mit dem öffentlichen Schlüssel verschlüsselt und kann lediglich von dem Empfänger mit dem privaten Schlüssel entschlüsselt werden. Hierdurch wird ein hohes Maß an Sicherheit hergestellt, da der private Schlüssel zum Entschlüsseln beim Empfänger geheimgehalten werden kann, während der öffentliche Schlüssel eine beliebige Verbreitung erfahren kann, ohne die Sicherheit der Verschlüsselung zu gefährden.

Asymmetrische Verfahren zur Verschlüsselung werden auch zur Herstellung einer digitalen Signatur von elektronischen Nachrichten verwendet. Hierbei komprimiert der Absender ein Dokument und verschlüsselt es mit seinem privaten Schlüssel und versendet das Ergebnis dieser Verschlüsselung anschließend mit dem unveränderten Dokument. Der Empfänger komprimiert das empfangene unveränderte Dokument mit dem bekannten Algorithmus, entschlüsselt das gleichzeitig übermittelte, mit dem geheimen Schlüssel verschlüsselte Komprimat mit dem öffentlichen Schlüssel des Absenders und vergleicht beide unverschlüsselten Komprimate miteinander. Bei Übereinstimmung der Komprimate ist eine Authentisierung des Absenders gewährleistet, wobei eine eindeutige Zuordnung des öffentlichen Schlüssels durch eine Zertifizierung bei einer Zertifizierungsstelle sichergestellt wird.

Es existieren verschiedene bekannte Verfahren zur Zahlungsabwicklung in zumindest teilweise öffentlich zugänglichen Netzen, die die beschriebenen Verschlüsselungs- und Signaturverfahren nutzen.

Das derzeit am weitesten verbreitete Verfahren zur Zahlungsabwicklung im Internet beruht auf dem Secure Socket Layer (SSL)-Protokoll. Bei dem SSL-Protokoll wird über eine Kombination von symmetrischen und asymmetrischen Verfahren zur Verschlüsselung der übertragenen Nachrichten eine Verschlüsselung sicherheitsrelevanter Nachrichten, wie beispielsweise einer Kreditkartennumer, auf dem Weg zwischen Absender und Empfänger gewährleistet. Die gravierendsten Probleme des SSL-Protokolls liegen in der eingeschränkten Sicherheit bei der Verschlüsselung und einer fehlenden Authentifizierung des Auftraggebers oder Debitors gegenüber dem Auftragnehmer oder Kreditor. Außerdem muß der Debitor bei der Nutzung des SSL-Protokolls dem Kreditor - der nicht in jedem Fall, beispielsweise bei Internetauktionen, vertrauenswürdig ist - seine Kreditkartennummer, persönliche Daten o.ä. übermitteln.

Ein weiteres bekanntes Verfahren zur Zahlungsabwicklung im Internet ist das Secure Electronic Transactions (SET)-Protokoll. Beim SET-Protokoll weisen sich der Debitor und der Kreditor über Zertifikate, die von einem Trust-Center bestätigt werden, gegenseitig aus. Nach dem Bestellauftrag durch den Kunden übersendet der Lieferant eine spezielle Datei mit den Bestellinformationen. Der Kunde verschlüsselt im Anschluß diese Informationen so, daß auch die Kreditkarteninformationen mit übertragen werden. Sowohl die Bestellinformationen als auch die Kreditinformationen werden anschließend elektronisigniert und wiederum an den Lieferanten übermittelt. Dieser entschlüsselt nur den Teil mit den Bestellinformationen und sendet die restlichen Daten an seine Bank. Die Bank des Lieferanten autorisiert dann die Abbuchung und übermittelt dem Lieferanten eine verschlüsselte Bestätigung. Im Anschluß hieran entschlüsselt der Lieferant diese Bestätigung, überprüft sie und bestätigt dem Kunden den erfolgten Kauf. Der Vorteil des SET-Protokolls liegt darin, daß der Lieferant die Kreditkartennummer nicht erfährt und die Bank des Lieferanten nicht erfährt, was der Kunde gekauft hat. Aufgrund der Verwendung von Kreditkartenkonten bei der Abwicklung von Zahlungen nach dem SET-Protokoll entstehen den Lieferanten oder Kreditoren hohe Kosten. Diese Kosten werden beispielsweise durch den Aufwand gerechtfertigt, der durch die Kreditkarteninstitute für den Fall zu erbringen ist, in dem die Kreditkartennummer mißbraucht wurde oder der Lieferant beispielsweise nicht geliefert hat.

Neben den bereits beschriebenen, bekannten Verfahren zur Zahlungsabwicklung im Internet sind verschiedene andere Verfahren bekannt, die bislang noch keine große Verbreitung gefunden haben. Zu nennen sind hier das sogenannt eCash, bei dem elektronische Münzen generiert werden, die auf dem Rechner des Debitors gespeichert werden können und zur Zahlungsabwicklung an den Kreditor übertragen werden können. Bei dem sogenannten CyberCash werden ebenfalls eine Art digitaler Münzen erzeugt und gleichzeitig zur Zahlung größerer Beträge die Zahlungsabwicklung per Lastschrift ermöglicht.

Als letztes Verfahren, welches sich auch zur Zahlungsabwicklung im Internet eignet, soll das sogenannte paybox-Verfahren erwähnt werden. Beim paybox-Verfahren erfolgt die Autorisierung der Zahlung über einen Anruf auf dem Mobiltelefon des Debitors, der die Zahlung dann per Eingabe seiner PIN-Nummer bestätigt.

Keines der bekannten Verfahren erfüllt die eingangs erwähnten Anforderungen an Verfahren zur Zahlungsabwicklung in zumindest teilweise öffentlich zugänglichen, elektronischen Netzen vollständig bzw. verursacht zu hohe Kosten.

Ausgehend von dem zuvor beschriebenen Stand der Technik liegt der Erfindung die Aufgabe zugrunde, ein Verfahren zur Zahlungsabwicklung in zumindest teilweise öffentlich zugänglichen, elektronischen Netzen zur Verfügung zu stellen, welches preiswert, mit hoher Geschwindigkeit und einfach zu bedienen sowie gleichzeitiger Erfüllung höchster Sicherheitsanforderungen arbeitet.

Die zuvor hergeleitete und aufgezeigte Aufgabe ist erfindungsgemäß durch ein Verfahren zur Zahlungsabwicklung in zumindest teilweise öffentlich zugänglichen, elektronischen Netzen gelöst, bei welchem einem Kreditor von einem Debitor über eine elektronische Nachricht ein Auftrag über die Lieferung eines Wirtschaftsgutes erteilt wird, dem Debitor vom Kreditor automatisch über eine elektronische Nachricht zumindest eine identifizierbare Auftragsbestätigung und die Höhe der Zahlung übermittelt werden, einer Bank des Debitors vom Debitor über eine signierte elektronische Nachricht zumindest die Zahlungsabsicht des Debitors, die Höhe der Zahlung, die Identifikation der Auftragsbestätigung und die Identität des Kreditors übermittelt werden, dem Kreditor von der Bank des Debitors über eine signierte elektronische Nachricht zumindest das Vorhandensein der Bonität des Debitors und die Identifikation des Auftrags übermittelt werden, der Bank des Debitors vom Kreditor und/oder dem Debitor über eine signierte elektronische Nachricht zumindest eine Bestätigung der Lieferung des Wirtschaftsgutes und die Identifikation des Auftrages übermittelt werden, dem Kreditor von der Bank des Debitors eine Zahlung angewiesen wird.

Das erfindungsgemäße Verfahren sichert einerseits eine einwandfreie Authentifizierung in einem für die Zahlungsabwicklung notwendigen Maß. Darüber hinaus erhält der Kreditor nur die zur Lieferung des Wirtschaftsgutes notwendigen Informationen über den Debitor - insbesondere zumindestens keine detaillierten Informationen über die Zahlungsverbindung. Weiter wird eine hohe Integrität gewährleistet, d.h., die Kaufinformationen können weder vom Kreditor noch vom Debitor, der Bank des Debitors oder Dritten gefälscht werden. Es ist auch eine einwandfreie Verbindlichkeit des Vertragsverhältnisses gewährleistet, da weder der Debitor die Annahme noch der Kreditor die Abgabe des Angebotes abstreiten kann. Schließlich läßt sich das Verfahren mit geringem Aufwand realisieren, gewährleistet eine hohe Geschwindigkeit und eine einfache Bedienung.

Dadurch, daß nach einer ersten Ausgestaltung des erfindungsgemäßen Verfahrens dem Debitor vom Kreditor über eine signierte elektronische Nachricht die Bankdaten des Kreditors übermittelt werden und der Bank des Debitors vom Debitor über eine signierte elektronische Nachricht die Bankdaten des Kreditors übermittelt werden, ist der notwendige Transfer der Bankdaten des Kreditors an die Bank des Debitors mit der notwendigen Authentisierung durch die Signatur gewährleistet. Alternativ zu der soeben beschriebenen Ausgestaltung des erfindungsgemäßen Verfahrens kann die notwendige Übermittlung der Bankdaten des Kreditors an die Bank des Debitors dadurch abgewickelt werden, daß dem Kreditor vom Debitor über eine elektronische Nachricht zumindest teilweise die Bankdaten des Debitors - zumindest der Name der Bank - übermittelt werden und der Bank des Debitors vom Kreditor über eine signierte elektronische Nachricht zumindest die Bankdaten des Kreditors und die Identifikation des Auftrages übermittelt werden. Mit Hilfe der Identifikation des Auftrages ist es der Bank des Debitors möglich, die Bankdaten des Kreditors dem Auftrag zur Zahlungsabwicklung durch den Debitor zuzuordnen.

Sind die Bankdaten des Kreditors der Bank des Debitors bereits nach dem Eingang der ersten signierten elektronischen Nachricht des Debitors bekannt, so wird dadurch, daß gemäß einer weiteren Ausgestaltung dem Kreditor von der Bank des Debitors über eine Bank des Kreditors über eine signierte elektronische Nachricht das Vorhandensein der Bonität des Debitors und die Identifikation des Auftrags übermittelt werden, eine Vereinfachung der Abwicklung der Kommunikation - der Bank des Kreditors sind alle Daten des Kreditors bekannt - und eine höhere Verbindlichkeit z. B. dadurch gewährleistet, daß die Zahlung bereits von der Bank des Debitors an die Bank des Kreditors erfolgt und bei Bestätigung der Lieferung dann unmittelbar von der Bank des Kreditors an den Kreditor abgewickelt wird. Die Kommunikation zwischen der Bank des Debitors und der Bank des Kreditors kann dabei abweichend von der restlichen Kommunikation über nicht öffentlich zugängliche, elektronische Netze - Bank-zu-Bank-Verbindungen - abgewickelt werden.

Im Hinblick auf eine mögliche Verbesserung der Authentifizierung kann das erfindungsgemäße Verfahren dadurch weitergebildet werden, daß der Bank des Debitors vom Kreditor über die Bank des Kreditors über eine signierte elektronische Nachricht eine Bestätigung der Lieferung des Wirtschaftsgutes und die Identifikation des Auftrages übermittelt werden. Dadurch, daß die Authentifizierung des Kreditors zwischen der Bank des Kreditors und dem Kreditor abgewickelt wird, kann evtl. eine noch zuverlässigere Authentifizierung des Kreditors aufgrund der Kundenbeziehung zur authentifizierenden Bank gewährleistet werden.

Dadurch, daß die zwischen dem Debitor und dem Kreditor ausgetauschten elektronischen Nachrichten zumindest teilweise signiert werden, läßt sich die Integrität und Authentifizierung bei der Abwicklung der Zahlung weiter verbessern.

Die Übersendung einer digitalen Signatur kann gemäß einer weiteren Ausgestaltung des Verfahrens dadurch genutzt werden, daß die Identifikation des Kreditors gegenüber der Bank des Debitors über eine vom Debitor an die Bank des Debitors automatisch weitergeleitete digitale Signatur des Kreditors erfolgt.

Eine Verbesserung der Vertraulichkeit auch im Hinblick auf die Bestellinformationen läßt sich dadurch gewährleisten, daß die zwischen Debitor, Kreditor, Bank des Debitors und/oder Bank des Kreditors ausgetauschten elektronischen Nachrichten zumindest teilweise verschlüsselt werden.

Eine Geheimhaltung der zur Auslieferung notwendigen Informationen über den Debitor läßt sich dadurch gewährleisten, daß dem Debitor vom Kreditor mit der Auftragsbestätigung automatisch der öffentliche Schlüssel eines asymmetrischen Verschlüsselungsverfahrens zur Verschlüsselung übersandt wird und der öffentliche Schlüssel des Kreditors bei dem Austausch der elektronischen Nachrichten zwischen Debitor, Bank des Debitors, Bank des Kreditors und/oder Kreditor zur Verschlüsselung der Lieferinformationen des Debitors verwendet wird. Nur der Kreditor kann mit seinem geheimen Schlüssel die Lieferinformationen des Debitors entschlüsseln.

Gemäß einer zweiten Lehre betrifft die Erfindung ein EDV-System zur Zahlungsabwicklung in zumindest teilweise öffentlich zugänglichen, elektronischen Netzen zur zumindest teilweisen Verwirklichung eines erfindungsgemäßen Verfahrens zur Zahlungsabwicklung.

Schließlich betrifft die Erfindung gemäß einer dritten Lehre ein Computerprogramm zur Zahlungsabwicklung in zumindest teilweise öffentlich zugänglichen, elektronischen Netzen mit Programmbefehlen für ein EDV-System zur zumindest teilweisen Verwirklichung eines erfindungsgemäßen Verfahrens zur Zahlungsabwicklung auf dem EDV-System.

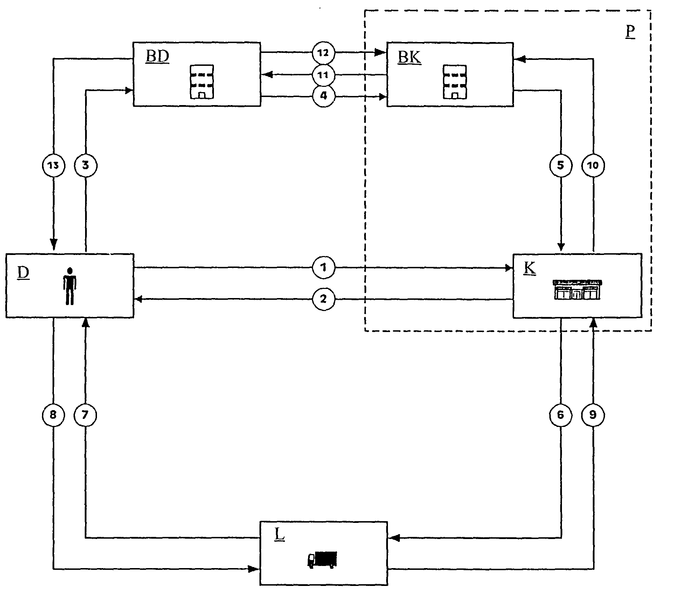

Es existieren nun eine Vielzahl von Möglichkeiten, das erfindungsgemäße Verfahren bzw. das erfindungsgemäße EDV-System und das erfindungsgemäße Computer-Programm auszugestalten und weiterzubilden. Hierzu wird beispielsweise verwiesen einerseits auf die dem Patentanspruch 1 nachgeordneten Patentansprüche, andererseits auf die Beschreibung eines Ausführungsbeispiels in Verbindung mit der Zeichnung. In der Zeichnung zeigt die einzige Figur ein Ablaufmodell eines Ausführungsbeispiels des erfindungsgemäßen Verfahrens zur Zahlungsabwicklung in zumindest teilweise öffentlich zugänglichen, elektronischen Netzen in einer Übersicht.

In den Ablauf des erfindungsgemäßen Verfahrens involviert sind ein Debitor D, ein Kreditor K, eine Bank des Debitors BD, eine Bank des Kreditors BK und ein Lieferant L. Die Rolle des Lieferanten L entfällt beispielsweise bei über elektronische Netze übertragbare Wirtschaftsgüter wie beispielsweise Software oder Informationen, wie beispielsweise Auszüge aus Datenbanken. Sowohl bei dem Debitor als auch dem Kreditor kann es sich um Unternehmen als auch um Privatpersonen handeln.

Die Voraussetzungen zur Verwirklichung des in der einzigen Figur dargestellten Ausführungsbeispiels eines erfindungsgemäßen Verfahrens sind die folgenden:

Der Debitor D besitzt ein Girokonto bei der Bank des Debitors BD und läßt die erfindungsgemäß notwendige Internet-Funktionalität bei der Bank des Debitors BD aktivieren. Zur Nutzung des erfindungsgemäßen Verfahrens erhält der Debitor eine Softwareerweiterung für die von ihm zur Nutzung des Internets verwendete Software - im allgemeinen als Browser bezeichnet. Zur Erzeugung der elektronischen Signatur besitzt der Debitor D ein mit seinem EDV-System verbundenen Smart Card Reader, mit dem die digitale Signatur von der Smart Card des Debitors geladen werden kann. Weiter besitzt sein EDV-System die notwendige Soft- oder Hardware zur Verschlüsselung elektronischer Nachrichten. Bei dem dargestellten Ausführungsbeispiel nimmt der Debitor D über ein Portal P mit marktplatzähnlicher Auflistung der involvierten Kreditoren, die mit der Bank des Kreditors BK verbunden sind Kontakt zu einem Lieferanten bzw. Kreditor auf. Der Lieferant bzw. Kreditor K ist bei der Bank des Kreditors BK als Partner registriert, besitzt die notwendige Software zur Verschlüsselung elektronischer Nachrichten und ebenso wie der Debitor D eine Internet-Bank-Verwaltungssoftware.

Die Bank des Debitors BD besitzt die zur Verschlüsselung notwendige Software und bietet die Internet-Funktionalität über eine Internet-Bank-Verwaltungssoftware.

Die Bank des Kreditors BK erstellt das Portal P, besitzt die zur Verschlüsselung notwendige Software und bietet die Internet-Funktionalität über eine Internet-Bank-Verwaltungssoftware.

Der Lieferant L genießt das Vertrauen des Kreditors im herkömmlichen Sinne.

### Nun zum Beispielablauf einer Bestellung:

Mit der verschlüsselten elektronischen Nachricht 1 werden die Bestelldaten vom Debitor D verschlüsselt an den Kreditor K gesandt. Im Anschluß hieran sendet der Kreditor K mit der elektronischen Nachricht 2 an den Debitor D in verschlüsselter Form eine Auftrags-Referenz-Nummer, den öffentlichen Schlüssel des Kreditors K, die eigenen Bankdaten und die digitale Signatur des Kreditors K.

Nach dem Empfang der elektronischen Nachricht 2 wird vom Debitor D die elektronische Nachricht 3 in verschlüsselter Form an die Bank des Debitors BD versendet. Die elektronische Nachricht 3 umfaßt die Informationen der elektronischen Nachricht 2 erweitert um die mit dem öffentlichen Schlüssel des Kreditors K verschlüsselten Lieferdaten des Debitors D bestätigt mit der digitalen Signatur des Debitors D.

Nach dem Empfang der elektronischen Nachricht 3 kann die Bank des Debitors BD, die Bank des Kreditors BK durch die empfangenen Daten identifizieren. Sie prüft die Bonität des Debitors D und kann gegebenenfalls den zu zahlenden Betrag reservieren. Im Anschluß hieran sendet die Bank des Debitors BD die verschlüsselte elektronische Nachricht 4 an die Bank des Kreditors BK. Die elektronische Nachricht 4 enthält die Informationen der elektronischen Nachricht 3 bestätigt mit der digitalen Signatur der Bank des Debitors BD.

Nach dem Erhalt der elektronischen Nachricht 4 sendet die Bank des Kreditors BK eine verschlüsselte Nachricht 5 an den Kreditor K. Die elektronische Nachricht 5 enthält die Auftrags-Referenz-Nummer, die Lieferanschrift, die mit dem öffentlichen Schlüssel des Kreditors K verschlüsselt wurde und die digitale Signatur der Bank des Kreditors BK.

Nach dem Empfang der elektronischen Nachricht 5 entschlüsselt der Kreditor K die Lieferanschrift sowie unter Umständen die Lieferzeit des Debitors D mit seinem geheimen Schlüssel und gibt beispielsweise über eine elektronische Nachricht 6 einen Lieferauftrag an seinen Lieferanten L. Die Auftragsdaten werden dabei anhand der Auftragsreferenz-Nummer identifiziert.

Der Lieferant L liefert die bestellte Ware in einem Schritt 7 an den Debitor D unter der Lieferanschrift aus. Im Schritt 8 bestätigt der Debitor D den Erhalt der Lieferung. Im Anschluß an die Auslieferung meldet der Lieferant L im Schritt 9 die Erfüllung des Lieferauftrages an den Kreditor K.

Nach dem Erhalt der Meldung über die Erfüllung des Lieferauftrages bestätigt der Kreditor K über eine vorzugsweise signierte elektronische Nachricht 10 die Ausführung der Lieferung und damit die Zahlungsanforderung an die Bank des Kreditors BK.

Die Bank des Kreditors BK gibt die Zahlungsanforderung mit Hilfe einer elektronischen Nachricht 11 an die Bank des Debitors BD weiter. Daraufhin überweist die Bank des Debitors BD in einem Schritt 12 den fälligen Betrag zugunsten es Kreditors K an die Bank des Kreditors BK.

Sowohl die Bank des Debitors BD als auch die Bank des Kreditors BK stellt dem Debitor D, respektive dem Kreditor K eine Kontoübersicht zur Verifizierung der Zahlungsabwicklung zur Verfügung.

Bei dem dargestellten Ausführungsbeispiel eines erfindungsgemäßes Verfahrens zur Zahlungsabwicklung in zumindest teilweise öffentlich zugänglichen, elektronischen Netzen wird die Authentizität dadurch gewährleistet, daß der Debitor D seine Identität durch eine digitale Signatur (beispielsweise mittels Paßwort bzw. Smart Card) bestätigt und der Kreditor K seine Identität ebenso wie die Bank des Debitors BD als auch die Bank des Kreditors BK durch ihre digitale Signatur bestätigen.

Die Geheimhaltung aller kritischen Informationen ist dadurch gewährleistet, daß die Artikelauswahl und Übermittlung der Bestellinformationen vom Kreditor K über den Debitor D verschlüsselt erfolgt und die Bank des Debitors BD als auch die Bank des Kreditors BK lediglich eine Identifikation des Auftrages, in der Regel ohne die detaillierten Bestellinformationen - erhalten. Darüber hinaus kommuniziert die Bank des Kreditors BK bei der dargestellten Lösung, die unter Verwendung eines Portals P arbeitet, mit dem Kreditor K über eine gesicherte Verbindung. Insbesondere erhält der Kreditor K keine Konto-Informationen des Debitors D, da diese Informationen zur Zahlungsabwicklung nicht notwendig sind.

Bei dem dargestellten Ausführungsbeispiel können die Bestellinformationen weder von dem Debitor D, dem Kreditor K, der Bank des Debitors BD, der Bank des Kreditors BK noch von Dritten gefälscht werden. Darüber hinaus kann der Kreditor K sein Angebot und der Debitor D seine Annahme des Angebotes und damit den Kauf nicht abstreiten, wobei die Banken des Debitors und des Kreditors BD, BK als vermittelnde und kontrollierende Instanz wirken.

Die Handhabung des erfindungsgemäßen Verfahrens zur Zahlungsabwicklung in zumindest teilweise öffentlich zugänglichen, elektronischen Netzen zeichnet sich dadurch aus, daß der Debitor D nur minimalen Aufwand beim einmaligen Einrichten und bei der Vergabe von Aufträgen hat. Darüber hinaus ist der Einsatz von virtuellem Geld nicht notwendig. Der Debitor D kann schnell und problemlos bei verschiedenen Händlern bzw. Kreditoren K in gleicher, intuitiv zugänglicher Form bestellen. Dabei gelangen keinerlei persönliche Daten einschließlich Zahlungsinformationen, wie z.B. Kreditkartennummern, an Dritte für den Empfang bestimmte Personen. Der Händler bzw. Kreditor K gewinnt einen größeren Kundenkreis durch hohe Akzeptanz der Zahlungsmodalitäten. Der Händler bzw. Kreditor K verringert seinen Arbeitsaufwand für die Zahlungsabwicklung bzw. seine finanziellen Aufwendungen für die Zahlungsabwicklung und erhält eine sehr hohe Zahlungssicherheit. Sowohl die Bank des Debitors BD als auch die Bank des Kreditors BK hat kaum mehr Aufwand aufgrund des hohen Automatisierungsgrades des erfindungsgemäßen Verfahrens.

Schließlich bieten sich bei dem dargestellten Ausführungsbeispiel für die Bank des Kreditors BK die Möglichkeit der Erschließung neuer Kunden über die Zurverfügungstellung eines attraktiven Portals P im Internet.

Bei dem beschriebenen Ausführungsbeispiel dient eine Auftragsreferenz-Nummer als Identifikation des Auftrags, anhand derer die Zuordnung der Bestellinformationen stattfindet. Zusätzlich zur Auftragsreferenz-Nummer werden bei dem beschreibenen Ausführungsbeispiel die genauen Kaufvertragsdaten übermittelt, welche ebenfalls von den einzelnen Teilnehmern signiert werden. Damit erfüllt das dargestellte Ausführungsbeispiel auch die entsprechenden deutschen und europäischen Gesetze (Signaturgesetze, Datenschutzgesetze, deutsches und europäisches Bankrecht, ...).

Zum Signieren der beschriebenen elektronischen Nachrichten eignet sich insbesondere die digitale Signatur unter der Verwendung von Hash-Algorithmen in Kombination mit asymmetrischen Verschlüsselungsverfahren.

## Patentansprüche

1. Verfahren zur Zahlungsabwicklung in zumindest teilweise öffentlich zugänglichen, elektronischen Netzen,
bei welchem einem Kreditor von einem Debitor über eine elektronische Nachricht ein Auftrag über die Lieferung eines Wirtschaftsgutes erteilt wird,
dem Debitor vom Kreditor über eine elektronische Nachricht zumindest eine identifizierbare Auftragsbestätigung und die Höhe der Zahlung übermittelt werden,
einer Bank des Debitors vom Debitor über eine signierte elektronische Nachricht zumindest die Zahlungsabsicht des Debitors, die Höhe der Zahlung, die Identifikation der Auftragsbestätigung und die Identität des Kreditors übermittelt werden,
dem Kreditor von der Bank des Debitors über eine signierte elektronische Nachricht zumindest das Vorhandensein der Bonität des Debitors und die Identifikation des Auftrags übermittelt werden,
der Bank des Debitors vom Kreditor und/oder dem Debitor über eine signierte elektronische Nachricht zumindest eine Bestätigung der Lieferung des Wirtschaftsgutes und die Identifikation des Auftrages übermittelt werden,
dem Kreditor von der Bank des Debitors eine Zahlung angewiesen wird.

2. Verfahren nach Anspruch 1,
**dadurch gekennzeichnet, daß**
dem Debitor vom Kreditor über eine signierte elektronische Nachricht die Bankdaten des Kreditors übermittelt werden und der Bank des Debitors vom Debitor über eine signierte elektronische Nachricht die Bankdaten des Kreditors übermittelt werden.

3. Verfahren nach Anspruch 1,
**dadurch gekennzeichnet, daß**
dem Kreditor vom Debitor über eine elektronische Nachricht zumindest teilweise die Bankdaten des Debitors übermittelt werden
und der Bank des Debitors vom Kreditor über eine signierte elektronische Nachricht zumindest die Bankdaten des Kreditors und die Identifikation des Auftrages übermittelt werden.

4. Verfahren nach einem der Ansprüche 1 bis 3,
**dadurch gekennzeichnet, daß**
dem Kreditor von der Bank des Debitors über eine Bank des Kreditors über eine signierte elektronische Nachricht das Vorhandensein der Bonität des Debitors und die Identifikation des Auftrags übermittelt werden.

5. Verfahren nach einem der Ansprüche 1 bis 4,
**dadurch gekennzeichnet, daß**
der Bank des Debitors vom Kreditor über die Bank des Kreditors über eine signierte elektronische Nachricht eine Bestätigung der Lieferung des Wirtschaftsgutes und die Identifikation des Auftrages übermittelt werden.

6. Verfahren nach einem der Ansprüche 1 bis 5,
**dadurch gekennzeichnet, daß**
die zwischen dem Debitor und dem Kreditor ausgetauschten elektronischen Nachrichten zumindest teilweise signiert werden.

7. Verfahren nach Anspruch 6,
**dadurch gekennzeichnet, daß**
die Identifikation des Kreditors gegenüber der Bank des Debitors über eine vom Debitor an die Bank des Debitors automatisch weitergeleitete digitale Signatur des Kreditors erfolgt.

8. Verfahren nach einem der Ansprüche 1 bis 7,
**dadurch gekennzeichnet, daß**
die zwischen Debitor, Kreditor, Bank des Debitors und/oder Bank des Kreditors ausgetauschten elektronischen Nachrichten zumindest teilweise verschlüsselt werden.

9. Verfahren nach Anspruch 8,
**dadurch gekennzeichnet, daß**
dem Debitor vom Kreditor mit der Auftragsbestätigung automatisch der öffentliche Schlüssel eines asymmetrischen Verfahrens zur Verschlüsselung übersandt wird und
der öffentliche Schlüssel des Kreditors bei dem Austausch der elektronischen Nachrichten zwischen Debitor, Bank des Debitors, Bank des Kreditors und/oder Kreditor zur Verschlüsselung der Lieferinformationen des Debitors verwendet wird.

10. EDV-System zur Zahlungsabwicklung in zumindest teilweise öffentlich zugänglichen, elektronischen Netzen zur zumindest teilweisen Verwirklichung eines Verfahrens nach einem der Ansprüche 1 bis 9.

11. Computer-Programm zur Zahlungsabwicklung in zumindest teilweise öffentlich zugänglichen, elektronischen Netzen mit Programmbefehlen für ein EDV-System zur zumindest teilweisen Verwirklichung eines Verfahrens nach einem der Ansprüche 1 bis 9 auf dem EDV-System.

12. Computer-Programm nach Anspruch 11, gespeichert auf einem maschinenlesbaren Medium.
